# EUROPÄISCHE PATENTANMELDUNG

(11) **EP 3 373 546 A1**
(43) Veröffentlichungstag der Anmeldung: **12.09.2018**
(21) Anmeldenummer: 17160179.2
(22) Anmeldetag: 09.03.2017
(51) Int. Cl.: H04L 29/06, H04L 29/08, G06F 21/62, G06Q 50/24

(54) **COMPUTERSYSTEM UND VERFAHREN MIT CLIENT, PROXY-SERVER UND SERVER**

(71) Anmelder: EOS Health Honorarmanagement AG, 20099 Hamburg (DE)
(72) Erfinder: SUTHE, Michael, 24576 Bad Bramstedt (DE); DAVIDS, Patrick, 22145 Hamburg (DE); BRARDT, Jürgen, 22880 Wedel (DE)
(74) Vertreter: Behr, Wolfgang

(57) **Zusammenfassung**

Die vorliegende Erfindung zeigt ein Computersystem mit einem Server und einem Proxy-Server zur Kommunikation mit einem Client, insbesondere zur Bereitstellung eines Praxis-Management-Systems, wobei der Proxy-Server und der Server so ausgestaltet sind, dass die Kommunikation zwischen dem Client und dem Server über den Proxy-Server erfolgt, wobei auf dem Client eingegebene Daten auf dem Server gespeichert und wieder durch den Client abgerufen werden können. Dabei ist vorgesehen, dass erste Daten, welche auf dem Client eingebbar sind, durch den Proxy-Server so verschlüsselt werden, dass sie durch den Server nicht entschlüsselt werden können, und verschlüsselt auf dem Server abgespeichert werden, und dass zweite Daten, welche auf dem Client eingebbar sind, so an den Server übertragen werden, dass sie dort als Klartext verarbeitet werden können.

## Beschreibung

Die vorliegende Erfindung betrifft ein Computersystem mit einem Server und einem Proxy-Server zur Kommunikation mit einem Client. Bei dem Client kann es sich dabei insbesondere um einen Browser, bei dem Server um einen Web-Server handeln.

Unter dem Stichwort "software as a service" wird zunehmend versucht, Software-Lösungen, welche zuvor beim Kunden lokal installiert waren, über das Internet anzubieten. Der Kunde greift dabei über einen Browser auf die auf dem Server bereitgestellte Software-Lösung zu. Der Server dient auch zur Speicherung und Verarbeitung der Daten, welche über den Browser eingegeben werden. Weiterhin ist es bekannt, zur Kommunikation mit einem Server einen Proxy-Server einzusetzen, beispielsweise zur Content-Filterung. Solche internet-basierten Systeme haben viele Vorteile im Hinblick auf Sicherheit, Flexibilität und Kosten.

Im Bereich von Praxis-Management-Systemen für Ärzte, insbesondere für Zahnärzte, sind bisher jedoch nur Stand-Alone-Arbeitsplatzlösungen oder Rich-Client-Anwendungen verfügbar, zumeist auf Basis von Windows. Während die zur Verfügung gestellten Funktionen umfassend sind, werden hierdurch moderne Ansprüche an Sicherheit, Flexibilität und Kosteneffizienz nicht hinreichend erfüllt.

Daher wäre es wünschenswert, auch Praxis-Management-Systeme webbasiert anbieten zu können. Eine einfache Übertragung der bisher lokal implementierten Prozesse auf einen Server ist jedoch bereits im Hinblick auf die Anforderungen des Datenschutzes nicht möglich, da Patientendaten zumindest ohne explizite Einwilligung der Patienten nicht an Dritte übertragen werden dürfen, und daher auch nicht durch eine durch Dritte betriebene Server-Lösung verarbeitet werden dürfen.

Aufgabe der vorliegenden Erfindung ist es daher, die technischen Voraussetzungen zu schaffen, welche eine Implementierung einer webbasierten Software-Lösung auf dem Computersystem erlauben.

Diese Aufgabe wird erfindungsgemäß durch ein Computersystem gemäß Anspruch 1 gelöst. Bevorzugte Ausgestaltungen der vorliegenden Erfindung sind Gegenstand der Unteransprüche.

Die vorliege Erfindung umfasst ein Computersystem mit einem Server und einem Proxy-Server zur Kommunikation mit einem Client. Der Proxy-Server und der Server sind so ausgestaltet, dass die Kommunikation zwischen dem Client und dem Server über den Proxy-Server erfolgt, wobei auf dem Client eingegebene Daten auf dem Server gespeichert und wieder durch den Client abgerufen werden können. Die vorliegende Erfindung ist dadurch gekennzeichnet, dass erste Daten, welche auf dem Client eingebbar sind, durch den Proxy-Server so verschlüsselt werden, dass sie durch den Server nicht entschlüsselt werden können, und verschlüsselt auf dem Server abgespeichert werden. Dagegen werden zweite Daten, welche auf dem Client eingebbar sind, so an den Server übertragen, dass sie dort als Klartext verarbeitet werden können. Insbesondere dient das Computersystem dabei zur Bereitstellung eines Praxis-Management-Systems, beispielsweise für Ärzte, insbesondere für Zahnärzte.

Die Verschlüsselung der ersten Daten derart, dass diese durch den Server nicht entschlüsselt werden können, macht die externe Datenverarbeitung überhaupt erst rechtlich zulässig, da hierdurch Patientendaten außerhalb der Praxis nicht als Klartext vorliegen. Entscheidend ist jedoch weiterhin, dass nicht generell alle Daten in dieser Form verschlüsselt werden, da dies eine sinnvolle Datenverarbeitung im Auftrag unmöglich machen würde. Daher werden zweite Daten so übertragen, dass sie im Server als Klartext vorliegen.

Bei dem Client handelt es sich bevorzugt um einen Browser, über welchen der Benutzer auf das System zugreifen kann. Client und Proxy-Server werden bevorzugt im Bereich der Praxis angeordnet und kommunizieren lokal miteinander. Bevorzugt kommuniziert der Proxy-Server über das Internet mit dem Server, insbesondere über den Austausch von HTML-Dateien und http-Requests.

In einer bevorzugten Ausgestaltung der vorliegenden Erfindung liefert der Server Datenstrukturen an den Proxy-Server aus, welche sowohl erste Daten als auch zweite Daten umfassen. Insbesondere kann es sich bei diesen Datenstrukturen um HTML-Dateien handeln.

Dabei werden die in einer vom Server ausgelieferten Datenstruktur enthaltenen ersten Daten durch den Proxy-Server vor der Weiterleitung an den Client entschlüsselt. Bevorzugt werden die ersten Daten dabei als entschlüsselte Daten wieder in die Datenstruktur eingesetzt, welche dann von dem Proxy-Server an den Client ausgeliefert wird. Der Client erhält daher von dem Proxy-Server eine Datenstruktur, in welcher sowohl die ersten, als auch die zweiten Daten als Klartext vorliegen. Von dem Server werden dagegen die ersten Daten lediglich in verschlüsselter Form ausgeliefert, und erst im Proxy-Server erfolgt deren Entschlüsselung. Bevorzugt handelt es sich bei den von dem Server ausgelieferten Datenstrukturen um HTML-Dateien.

Weiterhin kann der Client Datenstrukturen an den Proxy-Server ausliefern, welche erste und zweite Daten als Klartext enthalten. Bevorzugt erkennt der Proxy-Server die ersten Daten, und verschlüsselt diese vor der Weiterleitung an den Server. Bevorzugt werden die verschlüsselten ersten Daten von dem Proxy-Server wieder in die von dem Client erhaltene Datenstruktur eingesetzt, bevor diese dann an den Server weitergeleitet wird. Bevorzugt handelt es sich bei den von dem Client ausgelieferten Datenstrukturen um http-Requests.

Hierbei besteht allerdings das Problem, dass ein http-Request zu den übertragen Daten keinen Kontext mehr enthält, sondern nur Parameter in Form von Namen und zugehörigen Werten. Eine Entscheidung, ob ein Wert zu verschlüsseln ist, kann durch den Proxy-Server auf dieser Basis nicht getroffen werden.

In einer bevorzugten Ausgestaltung der vorliegenden Erfindung sind daher die in einer vom Server ausgelieferten Datenstruktur enthaltenen ersten und/oder zweiten Daten für den Proxy-Server als erste und/oder zweite Daten gekennzeichnet.

In einer ersten Alternative kann dies durch die von dem Server verwendeten Parameternamen erfolgen. In diesem Fall überprüft der Proxy-Server anhand der von dem Client erhaltenen Anfragen die Parameternamen, um die ersten Daten zu ermitteln und zu verschlüsseln.

Ein solches Vorgehen ist mit modernen, auf Servern eingesetzten Oberflächen-Frameworks jedoch nicht implementierbar, da diese die Verwaltung der Namen üblicherweise selbst handhaben. Die in den vom Server ausgelieferten Datenstrukturen verwendeten Parameternamen können vom Programmierer daher nicht mehr selbst festgelegt werden.

Bevorzugt erfolgt die Kennzeichnung der in einer vom Server ausgelieferten Datenstruktur enthaltenen ersten und/oder zweiten Daten daher über eine vom Datennamen unabhängige, zusätzliche Kennzeichnung, insbesondere über ein Attribut, welches von dem Proxy-Server entsprechend interpretiert wird. Beispielsweise kann hierfür ein spezielles HTML-Attribut eingesetzt werden, welches nur von dem Proxy-Server verstanden wird. Die Kennzeichnung der ersten und/oder zweiten Daten durch den Server erfolgt daher unabhängig von den Daten- bzw. Parameternamen.

Bevorzugt verändert der Proxy-Server den Datennamen der ersten und/oder zweiten Daten vor der Weiterleitung an den Client in Abhängigkeit von der Kennzeichnung, insbesondere in Abhängigkeit von dem Attribut, um die Daten anhand des Namens als erste und/oder zweite Daten zu kennzeichnen.

Werden daher entsprechende Werte für die Daten auf dem Client eingegeben bzw. verändert, und an den Proxy-Server zurückgesandt, kann dieser anhand des Namens die Daten wieder als erste und/oder zweite Daten identifizieren. Die Entscheidung, ob der Proxy-Server Daten in einer Anfrage des Client verschlüsselt oder nicht, erfolgt daher bevorzugt anhand der Datennamen.

Bevorzugt stellt der Proxy-Server vor der Weiterleitung der Anfrage des Client an den Server den ursprünglichen Namen wieder her.

Die Veränderung der Namen kann beispielsweise dadurch erfolgen, dass diesen ein Suffix zugefügt wird, welches kennzeichnet, ob es sich um erste und/oder zweite Daten handelt. Ein solches Suffix wird von dem Proxy-Server bevorzugt anhand eines in der HTML-Datei definierten Attributs der ersten und/oder zweiten Daten an den Dateinahmen hinzugefügt, bevor die Website an den Client ausgeliefert wird. Hierdurch sind, obwohl der http-Request des Client keine Attribute mehr enthält, die ersten und/oder zweiten Daten dennoch wieder für den Proxy-Server erkennbar. Bei dem Attribut handelt es sich daher bevorzugt um ein HTML-Attribut, welches eigens für das System geschaffen wurde, und nur von dem speziell ausgestalteten Proxy-Server interpretiert werden kann.

Dabei ist eine Kennzeichnung und/oder Umbenennung der ersten Daten ausreichend. Der Proxy-Server überprüft anhand dieser Kennzeichnung, ob eine Ver- oder Entschlüsselung vorgenommen und ob ggf. der Datenname genändert werden muss. Daten ohne Kennzeichnung werden in diesem Fall automatisch als zweite Daten behandelt.

Bevorzugt nimmt der Server eine Verarbeitung der vom Client übertragenen zweiten Daten anhand ihres Klartextes vor. Bei der Verarbeitung kann es sich insbesondere um eine Überprüfung und/oder Auswertung und/oder Weiterverarbeitung der zweiten Daten handeln.

Beispielsweise kann der Server eine Funktion zur statistischen Auswertung der zweiten Daten aufweisen. Bevorzugt kann diese Funktion durch den Client gestartet und deren Ergebnis an den Client übermittelt werden. Beispielsweise kann die statistische Auswertung Leistungs- und/oder Abrechnungsdaten betreffen.

Weiterhin kann der Server eine Funktion zur Überprüfung von auf dem Client eingegebenen und an den Server übertragenen zweiten Daten anhand ihres Klartextes aufweisen. Bevorzugt sendet die Funktion dabei im Falle einer Detektion eines Fehlers eine Fehlermeldung an den Client. Bevorzugt wird der Benutzer unmittelbar nach der Eingabe auf falsch eingegebene Daten hingewiesen.

Bevorzugt handelt es sich bei der Überprüfung um eine Plausibilitätsprüfung, bei welcher die zweiten Daten auf Ihre Konformität mit einem vorgegebenen Satz von Regeln überprüft werden. Beispielsweise können hierdurch Leistungsdaten auf Ihre Schlüssigkeit überprüft werden.

Bevorzugt wird die Funktion zur Überprüfung automatisch durch die Eingabe und Übertragung der zweiten Daten gestartet.

Erfindungsgemäß werden möglichst viele Funktionen auf Seiten des Servers implementiert, um die auf Seiten des Benutzers notwendige Softwareinstallation möglichst einfach zu halten. Dennoch gibt es einige Funktionen, welche auf Seiten des Kunden implementiert werden müssen. Diese werden erfindungsgemäß als Teil des Proxy-Servers zur Verfügung gestellt.

Bevorzugt weist der Proxy-Server eine Funktion zur Überprüfung von durch den Server ausgelieferten Datenstrukturen mit ersten und zweiten Daten anhand des Klartextes der ersten und/oder zweiten Daten auf. Insbesondere eine Überprüfung, bei welcher die ersten Daten mit einbezogen werden sollen, kann auf Seiten des Servers nicht erfolgen, da diese dort nicht im Klartext vorliegen. Erfindungsgemäß wird eine solche Überprüfung daher als Funktion des Proxy-Servers zur Verfügung gestellt.

In einer bevorzugten Ausgestaltung erfolgt die Überprüfung durch den Client zumindest teilweise anhand der gleichen Regeln und/oder zumindest teilweise durch die gleiche Software, wie die Überprüfung durch den Server. Insbesondere können die zweiten Daten hierdurch zweimal überprüft werden, das erste Mal nach der Eingabe auf dem Client und Übertragung an den Server auf Seiten des Servers, das zweite Mal nach der Übertragung der Datenstruktur mit gespeicherten Daten von dem Server an den Client. Bei der überprüften Datenstruktur kann es sich dabei beispielsweise um eine Abrechnungsdatei handeln.

In einer bevorzugten Ausgestaltung der vorliegenden Erfindung kann der Server unterschiedliche Arten von Datenstrukturen erstellen, welche erste und zweite Daten umfassen. Insbesondere kann der Server bevorzugt sowohl HTML-Dateien, als auch andere Datenstrukturen wie z.B. Textdateien erstellen. Bei den Textdateien kann es sich insbesondere um XML-Dateien handeln. Die HTML-Dateien können durch den Browser angezeigt werden, während die anderen Datenstrukturen üblicherweise im Hintergrund durch den Proxy-Server angefordert werden, um bestimmte im Proxy-Server implementierte Funktionen erfüllen zu können. Insbesondere werden diese Datenstrukturen dabei zur Unterstützung lokal auf dem Proxy-Server implementierter Funktionen vom Server zugeliefert.

Die ersten Daten müssen mit einem Schlüssel verschlüsselt werden, welcher ausschließlich auf dem Proxy-Server zur Verfügung steht, um zu verhindern, dass die ersten Daten auf dem Server entschlüsselt werden können.

Hierbei ist beispielsweise eine Verschlüsselung mit dem Schlüssel eines symmetrischen Verschlüsselungsverfahrens, welcher nur auf dem Proxy-Server vorliegt, möglich. Bevorzugt erfolgt die Verschlüsselung der ersten Daten dagegen mit dem öffentlichen Schlüssel eines asymmetrischen Verschlüsselungsverfahrens, dessen privater Schlüssel nur auf dem Proxy-Server vorliegt.

Bevorzugt erfolgt die Verschlüsselung der ersten Daten zweistufig.

Bevorzugt werden die ersten Daten mit einem Daten-individuellen Schlüssel verschlüsselt, welcher durch einen globalen Schlüssel verschlüsselt und zusammen mit den verschlüsselten ersten Daten übertragen und/oder abgespeichert wird. Dies macht einen Angriff auf das System erheblich schwieriger.

Bevorzugt handelt es sich bei dem daten-individuellen Schlüssel um einen Schlüssel eines symmetrischen Verschlüsselungsverfahrens. Bei dem globalen Schlüssel kann es sich um den öffentlichen Schlüssel eines asymmetrischen Verschlüsselungsverfahrens handeln. Bevorzugt ist dabei der private Schlüssel des asymmetrischen Verschlüsselungsverfahrens nur für den Proxy-Server zugänglich.

Weiterhin bevorzugt erfolgt zusätzlich die gesamte Kommunikation zwischen dem Proxy-Server und dem Server verschlüsselt, beispielsweise durch ein asymmetrisches Verschlüsselungsverfahren. Hierdurch wird die Kommunikation vor Angriffen Dritter gesichert. Der Server kann die durch die Proxy-Server verschlüsselte Kommunikation als solche daher entschlüsseln, nicht jedoch die gesondert verschlüsselten ersten Daten, welche auf Seiten des Servers nur verschlüsselt vorliegen. Die zweiten Daten können durch den Server dagegen komplett entschlüsselt und daher als Klartext verarbeitet werden.

Die zweiten Daten können auf dem Server dabei entweder als Klartext, oder wiederrum verschlüsselt abgespeichert werden. Werden die zweiten Daten durch den Server verschlüsselt, erfolgt dies jedoch so, dass sie durch den Server wieder entschlüsselt werden können.

Bevorzugt erfolgt die gesamte Kommunikation zwischen dem Client und dem Server über den Proxy-Server. Hierdurch wird sichergesellt, dass erste Daten, welche von dem Client übertragen werden, immer verschlüsselt werden. Weiterhin übernimmt der Proxy-Server auch den Schutz der Kommunikation gegenüber Dritten.

Weiterhin bevorzugt erfolgt auf dem Proxy-Server und/oder dem Client bis auf eventuelle Daten zur angebundenen Hardware keine Datenhaltung. Insbesondere werden alle Daten zu Patienten, zur Abrechnung, zu Behandlungen und/oder zur Praxis-Administration auf dem Server gespeichert. Bevorzugt ist der Proxy-Server daher bis auf eventuell vorgenommene Hardware-Konfigurationen zustandslos.

Der Server kann Funktionen zur Erstellung und/oder Bearbeitung von Vorlagen, Benutzerprofilen und/oder Benutzerberechtigungen aufweisen. Bevorzugt werden dabei Vorlagen, Benutzerprofile und/oder Benutzerberechtigungen auf dem Server abgespeichert, insbesondere als zweite Daten.

Der Proxy-Server kann Funktionen zur Anbindung von Hardware-Elementen aufweisen, insbesondere zur Anbindung von Druckern, Kartenlesegeräten und/oder bildgebenden Geräten. Hierdurch können die in einer Praxis vielfältig vorhandenen elektronischen Geräte an das Praxis-Management-System angeschlossen werden.

Weiterhin kann der Proxy-Server eine Druckfunktion aufweisen, welche Datenstrukturen mit ersten und zweiten Daten von dem Server anfordert, die ersten Daten entschlüsselt und die Datenstruktur mit dem Klartext der ersten Daten und der zweiten Daten ausdruckt. Die Druckfunktion kann neben der Datenstruktur auch Druckvorlagen von dem Server abrufen, welche zum Ausdruck der Datenstruktur eingesetzt werden.

Die Druckfunktion als solche wird lokal auf dem Proxy-Server implementiert, da diese auf erste Daten im Klartext zurückgreifen können muss. Durch die Anforderung der entsprechenden Daten vom dem Server kann die Druckfunktion im Proxy-Server jedoch sehr schlank implementiert werden.

Erfindungsgemäß werden bevorzugt Patientendaten als erste Daten behandelt, und daher nur verschlüsselt zum Server übertragen. Leistungs- und oder Abrechnungspositionen werden dagegen bevorzugt als zweite Daten übertragen, so dass diese durch den Server verarbeitet werden können.

Weiterhin kann vorgesehen sein, dass nur Datenfelder für strukturierte Daten als zweite Daten behandelt werden, und insbesondere nur Datenfelder mit einem festen Satz von Eingabemöglichkeiten. Bevorzugt werden dagegen freie Textfelder und/oder Grafikdateien als erste Daten behandelt. Dies verhindert, dass in solchen freien Textfeldern und/oder Grafikdateien zufällig enthaltene Patientendaten auf dem Server im Klartext vorliegen.

Neben dem Computersystem, welches aus dem Server und dem Proxy-Server besteht, umfasst die vorliegende Erfindung auch dessen Komponenten, d.h. den Server und den Proxy-Server, jeweils für sich genommen.

Die vorliegende Erfindung umfasst daher einen Server für ein Computersystem, wie es oben beschrieben wurde. Weiterhin umfasst die vorliegende Erfindung einen Proxy-Server für ein Computersystem, wie es oben näher beschrieben wurde.

Weiterhin umfasst die vorliegende Erfindung Software zur Implementierung eines Servers und/oder zur Implementierung eines Proxy-Servers für ein Computersystem, wie es oben beschrieben wurde. Die Software weist daher insbesondere Funktionen auf, welche die oben näher beschriebenen Funktionalitäten des erfindungsgemäßen Computersystems bzw. des erfindungsgemäßen Servers und/oder Proxy-Servers implementieren. Die Software kann auf einem Datenträger und/oder im einen Speicher gespeichert sein. Insbesondere kann es sich bei der Software daher um einen Computerprogrammprodukt handeln.

Die vorliegende Erfindung umfasst weiterhin ein Verfahren zur Kommunikation zwischen einem Server und einem Client mittels eines Proxy-Servers, wobei auf dem Client eingegebene Daten auf dem Server gespeichert und wieder durch den Client abgerufen werden. Dabei ist vorgesehen, dass erste Daten, welche auf dem Client eingegeben werden, durch den Proxy-Server so verschlüsselt werden, dass sie durch den Server nicht entschlüsselt werden können, und verschlüsselt auf dem Server abgespeichert werden. Weiterhin werden zweite Daten, welche auf dem Client eingegeben werden, so an den Server übertragen, dass sie dort als Klartext verarbeitet werden können.

Das erfindungsgemäße Verfahren erfolgt bevorzugt so, wie dies bereits oben im Hinblick auf das erfindungsgemäße Computersystem näher beschrieben wurde. Insbesondere erfolgt das erfindungsgemäße Verfahren unter Verwendung eines Computersystems, wie es oben beschrieben wurde.

Das erfindungsgemäße Verfahren dient bevorzugt dem Praxismanagement, insbesondere dem Praxismanagement einer Arztpraxis, insbesondere einer Zahnarztpraxis.

Bevorzugte Ausgestaltungen der vorliegenden Erfindungen werden im Folgenden anhand eines Ausführungsbeispiels sowie Zeichnungen näher beschrieben.

Dabei zeigen:
- Fig. 1a bis 1c:: drei Schritte, welche im Rahmen der Verschlüsselung der ersten Daten in einem Ausführungsbeispiel der vorliegenden Erfindung vorgenommen werden
- Fig. 2:: eine schematische Darstellung des Aufbaus eines Ausführungsbeispiels eines erfindungsgemäßen Computersystems,
- Fig. 3a:: eine schematische Darstellung des Aufbaus eines Ausführungsbeispiels eines erfindungsgemäßen Servers,
- Fig. 3b:: eine weitere schematische Darstellung eines Ausführungsbeispiels eines erfindungsgemäßen Servers, mit weiteren Details,
- Fig. 4:: eine schematische Darstellung des Aufbaus eines Ausführungsbeispiels eines erfindungsgemäßen Proxy-Servers, und
- Fig. 5:: einen schematischen Überblick über die Funktionen eines erfindungsgemäßen Computersystems.

Das im folgenden beschriebene Ausführungsbeispiel eines erfindungsgemäßen Computersystems erlaubt durch seine technische Ausgestaltung eine Patientendatenverarbeitung im Auftrag. Insbesondere wird durch das Computersystem ein Praxis-Management-System als Web-Service zur Verfügung gestellt.

Die Patientendatenverarbeitung im Auftrag wirft Fragestellungen in Bezug auf den Schutz der Patientendaten vor unbefugtem Zugriff auf. Neben den allgemeinen Rahmenbedingungen des Datenschutzes ist vor allem die Schweigepflicht des (Zahn)arztes nach §203 StGB zu beachten. In dieser Beziehung stehen dem (Zahn)arzt auch die berufsmäßig tätigen Gehilfen gleich.

Jede Übermittlung von personenbezogenen, medizinischen Patientendaten stellt zunächst eine Verletzung der Schweigepflicht dar. Eine Übermittlung der Daten zu einem Auftragsdatenverarbeitenden (Auftragnehmer) ohne eine Offenbarungsbefugnis oder Einwilligung des Patienten ist nicht zulässig. Die Offenbarungsbefugnis liegt jedoch im Allgemeinen nicht vor. Die Einwilligung des Patienten kann nicht konkludent angenommen werden. Das Einholen einer expliziten Einwilligung des Patienten scheidet aber aus, da der Arzt im Falle einer Verweigerung der Einwilligung seiner Behandlungspflicht dennoch nachkommen muss, ohne seiner Dokumentationspflicht nachkommen zu können. Eine Verweigerung der Behandlung würde den Patienten in seiner freien Arztwahl unzulässig einschränken.

Aus diesem Grunde steht bis heute kein Praxisverwaltungssystem für Ärzte, insbesondere für Zahnärzte, als "Software as a Service"-Dienstleistung zur Verfügung. Die vorliegende Erfindung löst das Problem technisch, ohne dabei das "Software as a Service"-Prinzip zu relativieren.

Um die Patientendatenverarbeitung im Auftrag zu ermöglichen, werden die Patientendaten im Rahmen der vorliegenden Erfindung lediglich pseudonymisiert übertragen und gespeichert, so dass keine Offenbarung der Patientendaten erfolgt.

Um eine sichere Handhabung zu gewährleisten, werden im Ausführungsbeispiel folgende weitere Merkmale implementiert:
- Die Daten werden bereits in der Praxis vor der Übermittlung an den Server verschlüsselt.
- Das System ist so konzipiert, dass die Daten nur in der Praxis entschlüsselt werden können.
- Der Schlüssel selbst verbleibt in der Praxis und verlässt diese nicht.
- Für die Pseudonymisierung werden mindestens die Namens- und Adressdaten des Patienten- verschlüsselt.
- Darüber hinaus werden alle patientenbezogenen Dokumente, Bilder und Freitextdokumentationen wegen evtl. namentlicher Nennungen verschlüsselt.
-

Um diesen Anforderungen gerecht zu werden, wurde ein dreistufiger Systemaufbau gewählt.

Die Erfassung der Daten erfolgt auf einem Praxis PC per Browser. Für die Kommunikation mit der Serverinfrastruktur, welche die Verarbeitung und/oder Speicherung der Daten übernimmt, wird auf einem beliebigen Computer in der Praxis ein spezieller Software-Proxy installiert (im Folgenden "Proxy-Server"). Dieser hat als einzige Instanz den praxisindividuellen Schlüssel gespeichert und kanalisiert die gesamte Kommunikation mit dem externen Server.

Der Proxy-Server identifiziert in allen Anfragen die zu verschlüsselnden Felder und verschlüsselt diese vor der Übertragung. Der Upload von Dokumenten erfolgt entweder über den Browser (und damit über den Proxy-Server), oder als Hintergrundprozess durch den Proxy-Server selbst. In beiden Fällen kann der Proxy-Server Daten bedarfsgerecht verschlüsseln.

Bei der Abfrage der Daten vom Server werden verschlüsselte Felder wiederum von dem Proxy-Server identifiziert und entschlüsselt, um z.B. im Browser korrekt angezeigt zu werden.

Entscheidend ist, dass nicht generell alle Daten verschlüsselt werden. Dies würde eine sinnvolle Datenverarbeitung im Auftrag unmöglich machen, da auf verschlüsselten Daten keine Anwendungsfälle realisiert werden können. Durch die intelligente Extraktion und Verschlüsselung der ersten, sensiblen Daten aus dem Informationsfluss wird es möglich, zahlreiche zweite Daten, wie Leistungspositionen o.ä. unverschlüsselt und dabei ohne Bezug zu einer konkreten Person zu speichern.

Die meisten Anwendungsfälle können komplett auf dem Server implementiert werden. Lediglich Anwendungsfälle, die unbedingt z.B. den Namen eines Patienten im Klartext erfordern, müssen auf dem Proxy-Server und damit in der Zahnarztpraxis abgebildet werden. Da diese eine geringe Zahl von Anwendungsfällen umfassen, und der Proxy-Server darüber hinaus zustandslos ist, bleibt das "Software as a Service"-Prinzip unrelativiert.

Schwierig dabei ist, dass eine HTTP-Anfrage des Browsers zu den übertragenen Daten keinen Kontext mehr enthält, sondern nur Parameter in Form von Namen und zugehörigen Werten. Eine Entscheidung, ob ein Wert zu verschlüsseln ist, kann durch den Proxy-Server auf dieser Basis nicht getroffen werden.

Die naheliegende Lösung, durch den Parameternamen kenntlich zu machen, ob eine Verschlüsselung notwendig ist, scheidet aus, da moderne Oberflächen-Frameworks für Server die Verwaltung der Namen selbst handhaben. Bei der Programmierung des Servers können die für einzelne Parameter verwendeten Namen daher bei Einsatz eines solchen Oberflächen-Frameworks nicht mehr durch den Programmierer festgelegt werden.

Daher wurde ein System eigener HTML-Attribut-Elemente geschaffen, die nur von dem Proxy-Server interpretiert und für die gewünschte Funktion verwendet werden. Wird ein solches HTML-Attribut für einen Parameter vergeben, bedeutet dies, dass es sich um erste Daten handelt, d.h. dass der damit gekennzeichnete Parameter verschlüsselt wird. Ggf. können auch zweite, d.h. unverschlüsselte Daten mit einem entsprechenden Attribut gekennzeichnet werden. Ansonsten wird davon ausgegangen, dass es sich bei Daten ohne Attribut um zweite Daten handelt.

Der Proxy-Server benennt die ersten, anhand des Attributs erkannten Daten vor der Weiterleitung des Formulars an den Browser dann jedoch um, so dass diese anhand des Namens als erste Daten identifizierbar sind. Beispielsweise kann hierfür eine Suffix angehängt werden. Hierdurch können die ersten Daten auch in den vom Browser zurückkommenden http-requests als solche identifiziert und vor der Weiterleitung an den Server verschlüsselt werden. Die Namen der ersten Daten werden vor der Weiterleitung an den Server durch den Proxy-Server bevorzugt wieder zurückgesetzt.

Der konkrete Ablauf stellt sich wie folgt dar:

### Vorbedingung

Die zu verschlüsselnden Formularfelder (erste Daten) müssen durch den Programmierer mit einem entsprechenden Attribut versehen werden.

### Download

Bevor Daten eingegeben, übertragen oder verschlüsselt werden, muss durch den Anwender zunächst die Anwendung mit einem Internet-Browser geöffnet werden.
1. Der Browser stellt eine Anfrage an den Proxy-Server.
2. Der Proxy-Server stellt die Anfrage stellvertretend an den Server.
3. Der Server liefert ein HTML-Formular aus.
4. Der Proxy-Server liest das Formular ein.
5. Der Proxy-Server benennt innerhalb des HTML-Formulars durch das Attribut als erste Daten gekennzeichnete Formularfelder um, indem er die Namen um ein Suffix ergänzt, so dass der Namen die Daten als erste, zu verschlüsselnde Daten kennzeichnet.
6. Der Proxy-Server liefert das veränderte Formular an den Browser aus.

Der Anwender kann das Formular wie gewohnt nutzen. Die Änderungen, die der Proxy-Server vorgenommen hat, sind für ihn nicht direkt ersichtlich.

### Upload

Wenn der Anwender über seinen Browser die gewünschten Änderungen vorgenommen hat, wird das Formular über den Proxy-Server abgesendet.
1. Der Browser sendet die Parameter als http-request mit Namen und Werten an den Proxy-Server.
2. Der Proxy-Server wertet die Parameter-Namen aus.
   a. Erkennt der Proxy-Server anhand des Suffixes, dass es sich um erste Daten handelt, verschlüsselt der Proxy-Server den Wert, und markiert diesen ggf. als verschlüsselt.
   b. Zweite Daten bleiben unverschlüsselt.
   c. Der Proxy-Server entfernt das Suffix, so dass die von dem Server ausgegebenen Namen wiederhergestellt sind, und setzt die Daten wieder in den http-request ein.
3. Der Proxy-Server sendet die Parameter mittels des http-requests an den Server.
4. Der Server verarbeitet die empfangenen Daten.

### Erneuter Download

In der Regel ist mit der Verarbeitung der Daten durch den Server oder der einfachen Anzeige der dort gespeicherten Informationen ein erneuter Download durch den Browser des Anwenders verbunden.
1. Der Anwender initiiert den Download der Daten über den Browser.
2. Der Proxy-Server lädt die Daten vom Server.
3. Der Proxy-Server sucht als verschlüsselt markierte Daten und entschlüsselt diese.
4. Der Proxy-Server liefert die entschlüsselten Daten an den Browser.

Insbesondere kann der Download dabei in Form eines HTML-Formulars erfolgen:
1. Der Browser stellt eine Anfrage an den Proxy-Server.
2. Der Proxy-Server stellt die Anfrage stellvertretend an den Server.
3. Der Server liefert ein HTML-Formular aus.
4. Der Proxy-Server liest das Formular ein und wertet die Attribute der in dem HTML-Formular enthaltenen Daten aus.
   a. Erkennt der Proxy-Server anhand des Attributes, dass es sich um erste Daten handelt, entschlüsselt der Proxy-Server den Wert. Kann dieser durch den Browser wieder geändert werden, ergänzt er zudem den Namen um ein Suffix, welches den Parameter als erste Daten kennzeichnet.
   b. Erkennt der Proxy-Server anhand des fehlenden Attributes, dass es sich um zweite Daten handelt, belässt er den Wert und Namen unverändert.
   c. Der Proxy-Server setzt die geänderten Daten wieder in das HTML-Formular ein.
6. Der Proxy-Server liefert das veränderte Formular an den Browser aus.

In analoger Weise können auch lokal im Proxy-Server implementierte Prozesse, welche die ersten Daten als Klartext benötigen, umgesetzt werden:
1. Der Browser initiiert einen im Proxy-Server implementierten Prozess.
2. Der Proxy-Server stellt zur Durchführung des Prozesses eine Anfrage an den Server.
3. Der Server liefert eine Datenstruktur aus, bspw. eine XML-Datei, welche erste und zweite Daten enthält. Dabei werden die ersten Daten gekennzeichnet.
4. Der Proxy-Server liest die Datenstruktur ein und wertet die in der Datenstruktur enthaltenen Daten im Hinblick auf ihre Kennzeichnung aus.
   a. Erkennt der Proxy-Server, dass es sich um erste Daten handelt, entschlüsselt der Proxy-Server den Wert.
   b. Zweite Daten bleiben unverschlüsselt.
   c. Der Proxy-Server setzt die entschlüsselten Daten wieder in die Datenstruktur ein.
6. Der Proxy-Server führt den im Proxy-Server implementierten Prozess unter Verwendung der Datenstruktur durch.
Bei dem lokal implementierten Prozess kann es sich beispielsweise um einen Druckauftrag oder eine Abrechnungs-Erstellung und/oder Überprüfung handeln.

### Datenverschlüsselung

Grundlage für die Verschlüsselung erster, bspw. patientenbezogener Daten ist ein für jede Anwenderpraxis individuell generierter, asymmetrischer Schlüssel. Dieser ist nur dem Anwender bekannt und verlässt die Praxis nicht. Er ist unveränderlich und muss vom Anwender mit entsprechender Sorgfalt gegen Diebstahl und Verlust geschützt werden.

Für die Verschlüsselung von ersten, d.h. patientenbezogenen Daten wird ein mehrstufiges Prinzip zur Anwendung gebracht. Wird ein Datum (z.B. "Nachname") als zu verschlüsseln identifiziert, wird ein für das betreffende Datum individueller, symmetrischer 128-bit Schlüssel generiert, mit welchem das Datum per AES Algorithmus verschlüsselt wird.

Generell kann der Einsatz von AES mit einer Schlüssellänge von 128 Bit als sicher angesehen werden, da mehr Zeit und Energie für die Entschlüsselung eines Datums benötigt wird, als bei realistischer Betrachtung zur Verfügung stehen (Landauer Prinzip).

Um den Grad an Sicherheit zu erhöhen, wird der AES Algorithmus im Cipher Block Chaining (CBC) Betriebsmodus verwendet. Das Ergebnis der Verschlüsselung von Blöcken ist dabei abhängig vom vorhergehenden Block, so dass bei unterschiedlicher Initialisierung gleiche Blöcke unterschiedliche Verschlüsselungsergebnisse aufweisen.

In einem zweiten Schritt wird der für die AES Verschlüsselung verwendete Schlüssel selbst mit Hilfe des öffentlichen Teils des asymmetrischen Praxisschlüssels verschlüsselt. Als Algorithmus kommt hier Curve 25519 zum Einsatz. Im Gegensatz zu z.B. RSA gelten Algorithmen auf Basis von Elliptischen Kurven bei geringerer Schlüssellänge als ebenso sicher und sind deutlich performanter. Curve 25519 ist ein solcher Algorithmus, der zudem in verschiedenen Standards enthalten ist.

Beide Teile werden zusammengefügt und als Datum (z.B. "Nachname") an den Server übertragen

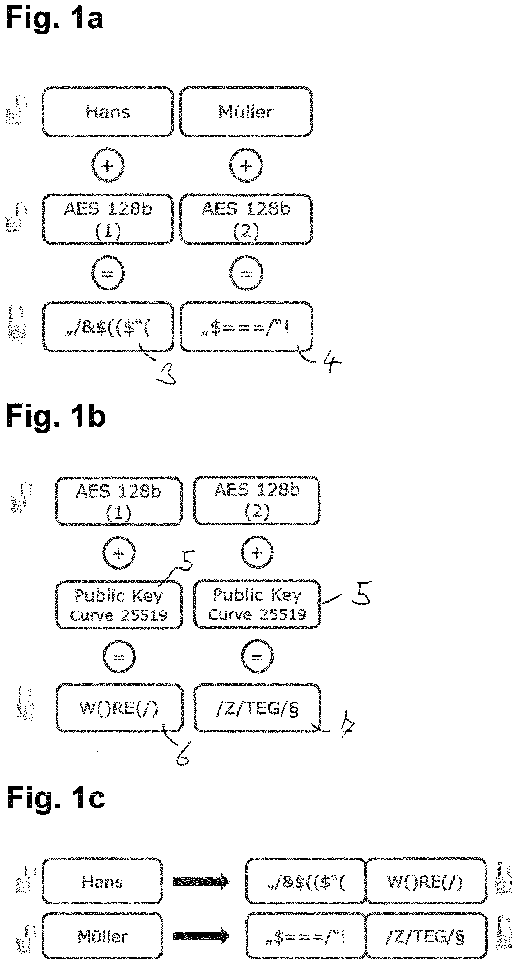

Bei dem in Fig. 1a bis 1c dargestellten Beispiel wird das Verfahren anhand eines zu verschlüsselnden Namens verdeutlicht:
Fig. 1 a zeigt den ersten Teilprozess:
   - Die ersten Daten "Hans" und "Müller" sollen verschlüsselt werden.
   - Für jedes erste Datum wird ein individueller 128 Bit AES Schlüssel 1 bzw. 2 zufällig generiert.
   - Diese werden jeweils genutzt, um die Daten einzeln im CBC Modus zu verschlüsseln.
   - Das Ergebnis sind zwei unabhängig verschlüsselte Daten 3 bzw. 4.
Fig. 1b zeigt den zweiten Teilprozess:
   - Die individuell für jedes Datum generierten AES Schlüssel 1 bzw. 2 liegen zunächst im Klartext vor.
   - Diese werden nun mit dem öffentlichen Teil 5 des praxisindividuellen asymmetrischen Schlüssels verschlüsselt.
   - Das Ergebnis sind zwei verschlüsselte Schlüssel 6 bzw. 7, die nur mit dem privaten Teil des praxisindividuellen asymmetrischen Schlüssels in der Praxis entschlüsselt werden können.
Fig. 1c zeigt den abschließenden Schritt:
   - Die beiden verschlüsselten Teile werden in einem letzten Schritt zusammengesetzt, d. h. die verschlüsselten Daten 3 und 4 werden mit dem zu ihrer Verschlüsselung eingesetzten, durch den globalen Praxisschlüssel verschlüsselten Schlüssel 6 bzw. 7 kombiniert. Die kombinierten verschlüsselten Daten werden an den Server übertragen und dort gespeichert.

Durch die Verwendung individueller Schlüssel ist zu diesem Zeitpunkt bereits Perfect Forward Secrecy erreicht. Ein Angreifer, der die verschlüsselten Daten auf Vorrat speichert und zu einem späteren Zeitpunkt in den Besitz eines verwendeten AES Schlüssels gelangt, hat keinen Zugriff auf weitere Daten. Ein Ermitteln des praxisindividuellen Schlüssels ist ebenfalls ausgeschlossen, da dieser die Praxis niemals verlässt. Insofern sind auch Angriffsszenarien durch Personen, die mit dem Betrieb der Applikation auf dem Server betraut sind, ebenfalls abgedeckt.

Um den Sicherheitsgrad noch einmal zu erhöhen und auch unverschlüsselt zu speichernde zweite Daten hinreichend zu schützen, wird für die Übertragung der Daten zusätzlich Perfect Forward Secrecy implementiert.

Hierfür wird zunächst die Verbindung zwischen dem Proxy-Server und dem Server durch ein Standard TLS Zertifikat eines öffentlichen Trust Centers abgesichert. Perfect Forward Secrecy wird bereits hier durch den Einsatz des Diffie-Hellman Verfahrens erreicht. Der für die Kommunikation verwendete, sitzungsindividuelle Schlüssel wird dabei zu keinem Zeitpunkt übertragen. Dies bewirkt, dass auch in der Vergangenheit geführte, verschlüsselt aufgezeichnete Kommunikation durch nachträgliches Bekanntwerden des geheimen Schlüssels nicht kompromittiert wird.

Um zu verhindern, dass unautorisierte Zugriffe auf den Server stattfinden, werden für jede Praxis ein oder mehrere, mit einem eigenen Root CA signierte Zertifikate ausgegeben. Nur der Besitz eines solchen Zertifikats erlaubt den Zugriff auf den Server. Bei Verlust kann ein Zertifikat auf Serverseite invalidiert werden. Dies verhindert nachhaltig den Zugriff auf den Server durch unbefugte Dritte, selbst wenn diese in den Besitz von Benutzername und Passwort eines Anwenders gelangen. Sollte jemand alle diese Hürden überwinden, und unautorisiert mit gültigen Anmeldedaten und "gültigem" Zertifikat Zugriff auf Daten erhalten, so ist er dennoch nicht im Besitz des praxisindividuellen, asymmetrischen Schlüssels und hat demzufolge immer noch keinen Zugriff auf sensible Patientendaten.

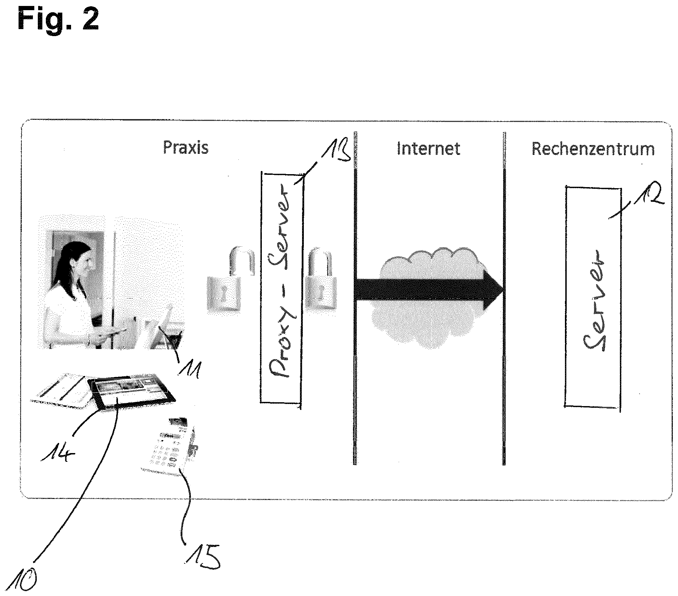

Die software-technische Implementierung des erfindungsgemäßen Systems, insbesondere des Proxy-Servers und Servers, kann beispielsweise so erfolgen, wie dies Anhand der Figuren 2 bis 4 an einem Ausführungsbeispiel näher erläutert wird.

Fig. 2 zeigt schematisch ein Ausführungsbeispiel für einen erfindungsgemäßen Systemaufbau:
Die Benutzer greifen über einen Browser 10, welche auf einem beliebigen in der Praxis aufgestellten Computern 11 installiert ist, auf den externen Server 12 zu. Hierfür ist in der Praxis zusätzlich ein Proxy-Server 13 installiert, welcher die gesamte Kommunikation mit dem externen Server 12 kanalisiert sowie die Ver- und Entschlüsselung der ersten Daten übernimmt. Die Kommunikation zwischen dem Server und dem Proxy-Server erfolgt verschlüsselt über das Internet.

Neben der eigentlichen Proxy-Funktionalität umfasst der Proxy-Server 13 weitere, durch die in der Praxis installierte Software zu implementierende Funktionen wie z.B. die Anbindung von Endgeräten, bspw. den PCs 11, mobiler Endgeräte 14, Kartenlesegeräte 15, Drucker, Sterilisationsgeräte und/oder VDDS-Media Geräte. Die Anbindung dieser Geräte erfolgt immer über den Proxy-Server, welcher den gesamten ein- und ausgehenden Datenverkehr bündelt und entscheidet, welche Datensegmente zu verschlüsseln sind. Beispielsweise weist der Proxy-Server eine Funktion zur Integration von Kartenlesegeräten (und zur verschlüsselten Übertragung der darauf gespeicherten Daten) auf. Weiterhin ist im Proxy-Server ein Caching für den performanten Zugriff auf ausgewählte Daten vorgesehen.

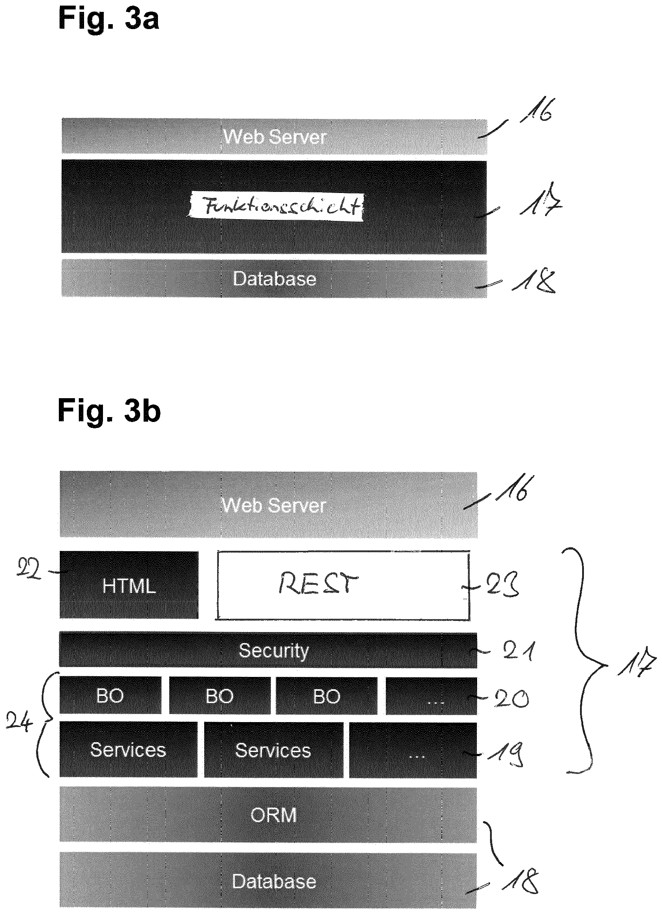

Fig. 3a zeigt den prinzipiellen Aufbau des Systems auf Serverseite im Rechenzentrum, welches als Drei-Schichten-Architektur aus einem Web-Server 16, einer Funktionsschicht 17 und einer Datenbank 18 aufgebaut ist.

Die Funktionsschicht 17 ist vollständig in Java implementiert. Sie setzt sich, wie in Fig. 3b gezeigt, noch einmal aus mehreren Schichten zusammen:
Die Applikationen 24 selbst sind als SOA Architektur in Services 19 und Business Objects 20 unterteilt. Zwischen den Applikationen 24 und der Präsentationsschicht 22, 23 ist ein Security Layer 21 installiert, der vor der Übergabe von Daten an die Präsentationsschicht 22, 23 bzw. vor dem Aufruf von Services 19 eine Prüfung hinsichtlich der Berechtigung des Benutzers zum Aufruf des Services (Rollenprüfung) und der Berechtigung des Benutzers zum Einsehen der zurückgelieferten Daten (Rechteprüfung) vornimmt.

Jeder Service 19 definiert hierfür per Annotation eine Liste von Funktionskennungen. Diese Funktionskennungen sind einer oder mehreren Rollen zugeordnet. Rollen können wiederum Benutzern (Logins) zugeordnet werden, um so die Rechtekonfiguration für die Anwender vorzunehmen. Vor jedem Aufruf einer Servicemethode 19 wird die Berechtigung des Benutzers geprüft, diese auszuführen.

Um die Darstellung von Oberflächenelementen 20, die ein Anwender ggf. nicht aufrufen darf, von vorherein zu verhindern, werden auch diese entsprechend mit Rollenkennungen annotiert. Die Prüfung der Sichtbarkeit erfolgt wiederum durch den Security Layer 21.

In der Präsentationssicht sind zwei Präsentationsframeworks integriert. Ein MVC 22 generiert die HTML-Oberflächen. Für die übrige Kommunikation mit dem Proxy-Server, mit mobilen Apps oder Produktpartnern wird ein REST Framework 23 eingesetzt.

Der Webserver 16 übernimmt Loadbalancing im Cluster Betrieb, SSL Client-Cert Authentifizierung und die https-Kommunikation.

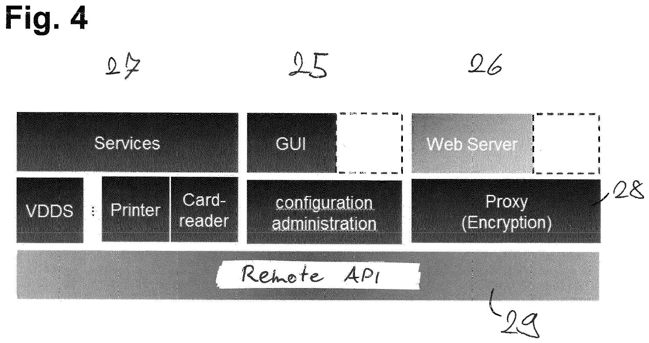

Der in Fig. 4 dargestellte Proxy-Server ist eine leichtgewichtige Java Applikation zur Installation in der Praxis. Der Aufbau lässt sich in drei Teile gliedern:
25: Konfiguration (Einrichtung der Praxisparameter)
26: Web Server (Bündelung d. Datenkommunikation; Verschlüsselung 28)
27: Services (Lokale Funktionalitäten; Geräteanbindung etc.)

Weiterhin ist zur Fernwartung eine remote API vorgesehen.

Durch die Implementierung in Java ist der Proxy-Server plattformunabhängig.

Das erfindungsgemäße Computersystem ist prinzipiell immer dann einsetzbar, wenn eine Datenverarbeitung von teilweise sensiblen Daten im Auftrag erfolgen soll. Bevorzugt wird das System dabei zur Implementierung einer Praxis-Management-Systems eingesetzt.

Das erfindungsgemäße System wird insbesondere zur Bereitstellung eines Praxis-Management-Systems für Ärzte eingesetzt werden, insbesondere für Zahnärzte. Ein Ausführungsbeispiel einer solchen Anwendung wird im Folgenden näher beschrieben:
Der Funktionsumfang des Systems ist im Ausführungsbeispiel so angelegt, dass zunächst der gesamte Lebenszyklus des Patienten in der Praxis abgebildet wird. Dieser beginnt mit der Anmeldung und Terminvereinbarung, der Pflege von Stammdaten und Versicherungsnachweisen und der Planung geeigneter Therapien. Bei der Umsetzung der Planung fällt Dokumentation in Form von Texten, Bildern und Leistungspositionen an. Abschließend müssen die erbrachten Leistungen dem Versicherungsstatus des Patienten entsprechend abgerechnet werden.

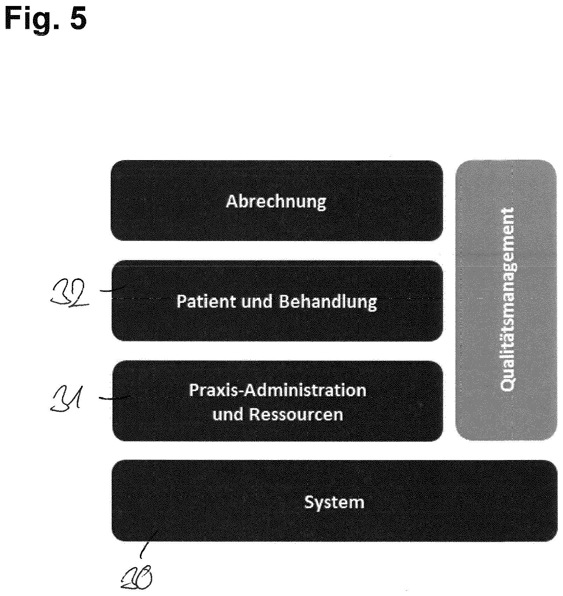

Das System lässt sich funktionell grob in vier oder fünf Bereiche teilen, welche in Fig. 5 dargestellt sind:
In der Systemschicht 30 sind die technischen Voraussetzungen für den Betrieb eines webbasierten Portals mit den spezifischen Sicherheitsanforderungen für eine datenschutzrelevante Applikation angesiedelt. Hierzu gehören auch die Benutzerverwaltung mit Rechte- und Rollenkonzepten für verschiedene Datenzugriffsebenen.

Im Rahmen der Praxisadministration und Ressourcen 31 werden eine Reihe von Basisdaten bereitgestellt, um Patienten, deren Versicherungsnachweise sowie erfolgte Behandlungen regelkonform zu verwalten und zu dokumentieren. Diese sind zum Teil durch den Anwender selbst administrierbar. So werden Gebühren- und Kassenverzeichnisse bereitgestellt, und Praxisressourcen wie Standorte, Abrechnungsstempel, Personal, Räume, Geräte etc. verwaltet.

Im Bereich Patient und Behandlung 32 erfolgt die Verwaltung von Patienten und die Planung und die Dokumentation von Behandlungen. Dies umfasst die Stammdatenpflege, die Pflege von Versicherungsnachweisen, Anamnesen und Einverständniserklärungen, sowie die nachhaltige Dokumentation von erbrachten Leistungen und medizinischen Zusatzinformationen wie z.B. patientenindividuellen Risikofaktoren.

Hierbei können historisierte Befunde unterschiedlicher Art ebenso erfasst und gespeichert werden, wie Dokumente und Bilder, die während der Therapie anfallen. Weiterhin sind Funktionen für die Planung von Versorgungen und die Erfüllung der Auflagen für die schriftliche Kommunikation von Kosten und Behandlungsrisiken vorgesehen.

Im Rahmen der Abrechnung sind unterschiedliche Funktionen für Privat- und Kassenpatienten vorgesehen. Zur Abrechnung der Leistungen für gesetzlich Versicherte ist eine Funktion zur gebündelten Abrechnung gegenüber der kassen(zahn)ärztlichen Vereinigung vorgesehen. Insbesondere kann hierfür ein gebündeltes Abrechnungsdokument erstellt werden. Für Privatpatienten bestehen Funktionen zur Erzeugung von Einzelrechnungen, die entweder direkt vom Arzt zugestellt oder über ein (zahn)ärztliches Abrechnungszentrum an die Patienten weitergeleitet werden können. Diese Funktionen sind auf dem Proxy-Server implementiert, da sie die Patientendaten als Klartext benötigen. Der Proxy-Server fordert hierfür die notwendigen Daten von dem Server an, und entschlüsselt die verschlüsselten Bestandteile dieser Daten.

Ein wesentlicher Teil der jeweiligen Abrechnungsprozesse ist die Prüfung der dokumentierten Leistungen auf Richtigkeit, Vollständigkeit und Plausibilität. Auch die Prüfung der Abrechnungsdateien kann durch Funktionen des Proxy-Servers erfolgen.

Die Funktionalitäten für das Qualitätsmanagement betreffen die Verwaltung der Definitionen von Soll-Praxisabläufen und die regelmäßige Dokumentation der Durchführung bestimmter Prozesse. Einen wesentlichen Prozess stellt die Sterilgut-Dokumentation dar. Das Qualitätsmanagement ist als Funktion optional.

Das System speichert auf dem Server zahlreiche Daten unterschiedlicher Natur. Die Daten werden entweder als erste, durch den Proxy-Server verschlüsselte Daten an den Server übertragen und dort verschlüsselt abgespeichert, oder als zweite, für den Server als Klartext nutzbare Daten. Im Folgenden werden die von dem System verarbeiteten Daten im Einzelnen beschrieben. Soweit nichts Näheres angegeben ist, werden die Daten als zweite Daten behandelt:
Anwender des Systems erhalten individuelle Zugangsdaten (Email und Passwort). Darüber hinaus werden für das Praxispersonal PINs vergeben, mit denen in einzelnen Anwendungsfällen ein Schnellzugriff auf die Oberfläche stattfinden kann.

Für das Praxispersonal werden persönliche Daten gespeichert. Die Daten des Personals werden erfasst, um diese als Ressourcen der Praxis verwalten zu können. So wird beispielsweise bei der Dokumentation einer Behandlung hinterlegt, wer diese Behandlung durchgeführt hat. Das vom System verwaltete Personal ist aus Datensicht von den Zugängen der Anwender zu unterscheiden. Im eben genannten Beispiel wird automatisch mit erfasst, wer die zur Behandlung gehörende Dokumentation erfasst hat. Da Anwender des Systems im Allgemeinen Praxispersonal sind, kann im System eine Verknüpfung zwischen Personal und Logins hergestellt werden. Dies erleichtert die Lesbarkeit bestimmter Informationen auf der Oberfläche. Die Zuordnung ist jedoch nicht zwingend. Aus Sicht der Applikation kann für das Personal auch mit Aliasen gearbeitet werden.

Die vorliegende Erfindung stellt damit ein vollwertiges Praxis-Management-System als "Software as a service" mit den damit verbundenen Vorteilen im Hinblick auf Flexibilität, Komfort, Sicherheit und Kosteneffizienz zur Verfügung.

## Patentansprüche

1. Computersystem mit einem Server und einem Proxy-Server zur Kommunikation mit einem Client, insbesondere zur Bereitstellung eines Praxis-Management-Systems,
wobei der Proxy-Server und der Server so ausgestaltet sind, dass die Kommunikation zwischen dem Client und dem Server über den Proxy-Server erfolgt, wobei auf dem Client eingegebene Daten auf dem Server gespeichert und wieder durch den Client abgerufen werden können,
**dadurch gekennzeichnet,**
**dass** erste Daten, welche auf dem Client eingebbar sind, durch den Proxy-Server so verschlüsselt werden, dass sie durch den Server nicht entschlüsselt werden können, und verschlüsselt auf dem Server abgespeichert werden, und dass zweite Daten, welche auf dem Client eingebbar sind, so an den Server übertragen werden, dass sie dort als Klartext verarbeitet werden können.

2. Computersystem nach Anspruch 1, wobei es sich bei dem Client um einen Browser handelt, und wobei der Proxy-Server über das Internet mit dem Server kommuniziert, insbesondere über den Austausch von HTML-Dateien und http-requests.

3. Computersystem nach Anspruch 1 oder 2, wobei der Server Datenstrukturen an den Proxy-Server ausliefert, welche sowohl erste Daten als auch zweite Daten umfassen, wobei die in einer vom Server ausgelieferten Datenstruktur enthaltenen ersten Daten durch den Proxyserver vor der Weiterleitung an den Client entschlüsselt werden und bevorzugt als entschlüsselte Daten wieder in die Datenstruktur eingesetzt werden, welche dann von dem Proxy-Server an den Client ausgeliefert wird, und/oder wobei es sich bei den Datenstrukturen bevorzugt um HTML-Dateien handelt.

4. Computersystem nach Anspruch 3, wobei die in einer vom Server ausgelieferten Datenstruktur enthaltenen ersten und/oder zweiten Daten für den Proxy-Server als erste und/oder zweite Daten gekennzeichnet sind, insbesondere über eine vom Datennamen unabhängige, zusätzliche Kennzeichnung, insbesondere durch ein Attribut, wobei bevorzugt der Proxy-Server den DatenNamen der ersten und/oder zweiten Daten vor der Weiterleitung an den Client in Abhängigkeit von der Kennzeichnung, insbesondere dem Attribut, verändert, um die Daten anhand des Namens als erste und/oder zweite Daten zu kennzeichnen, wobei weiter bevorzugt der Proxy-Server die in einer Anfrage des Clients enthaltenen Daten anhand ihres Namens als erste und/oder zweite Daten identifiziert, diese im Falle erster Daten verschlüsselt und weiter bevorzugt vor der Weiterleitung der Anfrage an den Server den ursprünglichen Namen wiederherstellt.

5. Computersystem nach einem der vorangegangenen Ansprüche, wobei der Server eine Verarbeitung, insbesondere eine Überprüfung und/oder Auswertung und/oder Weiterverarbeitung der zweiten Daten anhand ihres Klartextes vornimmt.

6. Computersystem nach Anspruch 5,
wobei der Server eine Funktion zur statistischen Auswertung der zweiten Daten aufweist, welche bevorzugt durch den Client gestartet werden kann und deren Ergebnis an den Client übermittelt wird, und/oder
wobei der Server eine Funktion zur Überprüfung von auf dem Client eingegebenen und an den Server übertragenen zweiten Daten anhand ihres Klartextes aufweist, wobei die Funktion bevorzugt im Falle der Detektion eines Fehlers eine Fehlermeldung an den Client sendet, wobei es sich bei der Überprüfung bevorzugt um eine Plausibilitätsprüfung handelt, bei welcher die zweiten Daten auf ihre Konformität mit einem vorgegebenen Satz von Regeln überprüft werden, wobei die Funktion zur Überprüfung bevorzugt durch die Eingabe und Übertragung der zweiten Daten gestartet wird.

7. Computersystem nach einem der vorangegangenen Ansprüche, wobei der Proxy-Server eine Funktion zur Überprüfung von durch den Server ausgelieferten Datenstrukuren mit ersten und zweiten Daten anhand des Klartextes der ersten und/oder zweiten Daten aufweist, wobei bevorzugt die Überprüfung durch den Client zumindest teilweise anhand der gleichen Regeln und/oder zumindest teilweise durch die gleiche Software erfolgt wie eine Überprüfung durch den Server.

8. Computersystem nach einem der vorangegangenen Ansprüche,
wobei der Server unterschiedliche Arten von Datenstrukturen erstellen kann, welche erste und zweite Daten umfassen, insbesondere HTML-Dateien und text-Dateien, insbesondere in Form von XML-Dateien.

9. Computersystem nach einem der vorangegangenen Ansprüche, wobei die ersten Daten mit einem daten-individuellen Schlüssel verschlüsselt werden, welcher durch einen globalen Schlüssel verschlüsselt und zusammen mit den verschlüsselten ersten Daten übertragen und/oder abgespeichert wird, wobei es sich bei den daten-individuellen Schlüsseln bevorzugt um den Schlüssel eines symmetrischen Verschlüsselungsverfahrens handelt und/oder wobei es sich bei dem globalen Schlüssel bevorzugt um den öffentlichen Schlüssel eines asymmetrischen Verschlüsselungsverfahrens handelt, wobei weiter bevorzugt der private Schlüssel des asymmetrischen Verschlüsselungsverfahrens nur für den Proxy-Server zugänglich ist.

10. Computersystem nach einem der vorangegangenen Ansprüche, wobei die Kommunikation zwischen dem Proxy-Server und dem Server verschlüsselt erfolgt, bevorzugt durch asymmetrische Verschlüsselungsverfahren, und/oder wobei die gesamte Kommunikation zwischen dem Client und dem Server über den Proxy-Server erfolgt, und/oder wobei auf dem Proxy-Server und/oder auf dem Client bis auf eventuelle Daten zur angebundenen Hardware keine Datenhaltung erfolgt.

11. Computersystem nach einem der vorangegangenen Ansprüche,
wobei auf dem Server Funktionen zur Erstellung und/oder Bearbeitung von Vorlagen, Benutzerprofilen und/oder Benutzerberechtigungen aufweist, wobei die Vorlagen, Benutzerprofile und/oder Benutzerberechtigungen bevorzugt auf dem Server abgespeichert werden können, bevorzugt als zweite Daten, und/oder
wobei der Proxy-Server Funktionen zur Anbindung von Hardware-Elementen aufweist, insbesondere zur Anbindung von Druckern, Kartenlesegeräten und/oder bildgebenden Geräten, und/oder
wobei der Proxy-Server eine Druckfunktion aufweist, welche Datenstrukturen mit ersten und zweiten Daten von dem Server anfordern, die ersten Daten entschlüsseln und die Datenstruktur mit dem Klartext der ersten Daten und der zweiten Daten ausdrucken kann, wobei die Druckfunktion bevorzugt neben der Datenstruktur eine Druckvorlage von dem Server abruft, welche zum Ausdruck der Datenstruktur herangezogen wird.

12. Computersystem nach einem der vorangegangenen Ansprüche, wobei bevorzugt Patientendaten als erste Daten behandelt werden und Lesitungs- und/oder Abrechnungspositionen als zweite Daten, und/oder wobei nur Datenfelder für strukturierte Daten, insbesondere Datenfelder mit einem festen Satz von Eingabemöglichkeiten, als zweite Daten behandelt werden, wobei bevorzugt freie Textfelder und/oder Grafik-Dateien als erste Daten behandelt werden.

13. Server und/oder Proxy-Server für ein Computersystem nach einem der vorangegangenen Ansprüche.

14. Software zur Implementierung eines Servers und/oder Proxy-Servers für ein Computersystem nach einem der vorangegangenen Ansprüche.

15. Verfahren zur Kommunikation zwischen einem Server und einem Client mittels eines Proxy-Servers, insbesondere unter Verwendung eines Computersystems nach einem der vorangegangenen Ansprüche, insbesondere zum Praxis-Management, wobei auf dem Client eingegebene Daten auf dem Server gespeichert und wieder durch den Client abgerufen werden,
**dadurch gekennzeichnet,**
**dass** erste Daten, welche auf dem Client eingeben werden, durch den Proxy-Server so verschlüsselt werden, dass sie durch den Server nicht entschlüsselt werden können, und verschlüsselt auf dem Server abgespeichert werden, und dass zweite Daten, welche auf dem Client eingegeben werden, so an den Server übertragen werden, dass sie dort als Klartext verarbeitet werden können.
